# EUROPÄISCHE PATENTSCHRIFT

(11) **EP 2 098 487 B1**
(45) Veröffentlichungstag und Bekanntmachung des Hinweises auf die Patenterteilung: **21.03.2012**
(21) Anmeldenummer: 09001248.5
(22) Anmeldetag: 29.01.2009
(51) Int. Cl.: C02F 3/12, C02F 3/20, B08B 9/055, B01D 21/24, C02F 1/00

(54) **Biologische Klärvorrichtung**
Biological clearing device
Dispositif de curage biologique

(30) Priorität: 04.03.2008 DE 202008003062 U
(43) Veröffentlichungstag der Anmeldung: 09.09.2009
(73) Patentinhaber: ATB Umwelttechnologien GmbH, 32457 Porta Westfalica (DE)
(72) Erfinder: Baumann, Markus, 32547 Bad Oeynhausen (DE); Vogt, Torsten, 31749 Auetal (DE)
(74) Vertreter: Müller, Frank

(56) Entgegenhaltungen:
- EP-A- 1 591 424

## Beschreibung

Die vorliegende Erfindung betrifft eine biologische Klärvorrichtung, mit mindestens einer Vorklärkammer, mindestens einer Klärkammer und Einrichtungen zur Beförderung und Behandlung von Abwasser gemäß dem Oberbegriff des Anspruchs 1.

Dokument EP 1 591 424 beschreibt eine biologische Klärvorrichtung mit einer Pumpeinrichtung, der ein Verteiler zur Unterteilung des Pumpenausstosses in wenigstens einen Hauptstrom und wenigstens einen Nebenstrom nachgeschaltet ist. Durch den Verteiler lässt sich der Pumpenausstoss einerseits in die Klärkammer und andererseits in die Vorklärkammer zur Schlammrückführung unterteilen.

Klärvorrichtungen der oben genannten Art werden zur Abwasserreinigung für Haushalte eingesetzt, die nicht an das öffentliche Kanalnetz angeschlossen sind. Der eigentlichen Klärkammer einer vollbiologischen Kläranlage ist gewöhnlich zumindest eine Vorklärkammer vorgeschaltet, die zur Abscheidung von Grobstoffen, zur Speicherung des zu klärenden Abwassers und des Überschußschlamms dient. Aus der Vorklärkammer wird das Abwasser in die Klärkammer eingeleitet, in der sich Belebtschlamm befindet. Von Zeit zu Zeit wird der Inhalt der Klärkammer durchlüftet und durchmischt. Nach einer Absetzphase kann das Klarwasser oberhalb des Belebtschlamms abgeführt werden. Ferner kann überschüssiger Schlamm aus der Klärkammer zurück in die Vorklärkammer gepumpt werden.

Ein Beispiel für eine derartige Kleinkläranlage wird in der europäischen Patentanmeldung 04 000 591 des Anmelders beschrieben. Hier kann das Abwasser durch Überläufe von einer ersten in eine zweite Vorklärkammer und anschliessend in die eigentliche Klärkammer laufen. Sowohl in der zweiten Vorklärkammer als auch in der Klärkammer sind Membranlüfter zur Belüftung des jeweiligen Beckeninhalts angeordnet. Diese Belüfter werden durch einen Kompressor als Druckquelle mit Luft versorgt. Zur Schlammrückführung aus der Klärkammer in die erste der Vorklärkammern ist hier ein Druckluftheber angeordnet, der mittels Druckluft den Schlamm über die Trennwand zwischen den Becken fördert.

Bei einer solchen Anlage müssen zumindest die Belüfter und der Heber zur Schlammrückführung über entsprechende Zuleitungen mit einem Druckfluid, also z. B. mit Druckluft oder einem Wasser-Luft-Gemisch versorgt werden. Zur Druckverteilung sind Ventile und Steuerungseinrichtungen erforderlich. Hinzu kommen unter Umständen weitere Einrichtungen wie etwa Pumpen zur Förderung von Abwasser von einer vorangehenden in die nächste Klärstufe und zum Abfördern des Klarwassers, die ebenfalls über entsprechende Steuerungen verfügen müssen. Hierdurch wird die gesamte Anlage kostenintensiv und darüber hinaus wartungsbedürftig und störungsanfällig.

Aufgabe der vorliegenden Erfindung ist es daher, eine biologische Klärvorrichtung der eingangs genannten Art zu schaffen, die relativ einfach aufgebaut ist und mit einer verminderten Anzahl von Ventilen und Steuerungseinrichtungen wie die bekannten Anlagen betrieben werden kann.

Diese Aufgabe wird erfindungsgemäß durch eine biologische Klärvorrichtung mit den Merkmalen des Anspruchs 1 gelöst.

Gemäß der vorliegenden Erfindung geht von der Druckleitung, die die Druckquelle mit dem Belüfter verbindet, eine Abzweigung zu einem Druckanschluß des Schlammhebers aus. In einem aufsteigenden Rohrabschnitt des Schlammhebers befindet sich ein oberer Ventilkörper, dessen Dichte größer ist als diejenige des Abwassers. Während das untere Ende dieses Rohrabschnitts an die Abzweigung von der Druckleitung angeschlossen ist, ist sein oberes Ende mit einem Ventilsitz zur Aufnahme dieses Ventilkörpers versehen.

An das untere Ende dieses Rohrabschnitts ist ein unteres Ventil angeschlossen, das zur Verbindung des Innenbereichs des Schlammhebers mit seiner Umgebung vorgesehen ist. Dieses untere Ventil ist durch eine Druckbeaufschlagung des Schlammhebers von innen verschließbar.

Durch diese Anordnung ist es möglich, die Belüftung und die Schlammrückführung der Klärvorrichtung in einfacher Weise ohne aufwendige Ventileinrichtungen wie etwa Magnetventile. Stellventile oder dergleichen zu betreiben. Im drucklosen Zustand befindet sich im aufsteigenden Rohrabschnitt des Schlammhebers der gleiche Wasserstand wie außerhalb des Rohrs im Klärbecken. Der obere Ventilkörper im aufsteigenden Rohrabschnitt liegt aufgrund seines Eigengewichts am unteren Ende dieses Rohrabschnitts auf, beispielsweise an einem dort vorgesehenen Anschlag, während das untere Ventil geöffnet ist.

Beide Ventilsitze sind damit geöffnet, und der Inhalt des Klärbeckens kann durch das geöffnete untere Ventil in den Schlammheber strömen. Ist der Schlammheber beispielsweise in einer geeigneten Höhe über dem Boden der Klärkammer angeordnet, kann überschüssiger Schlamm während der Absetzphase in den Schlammheber eindringen und diesen weitgehend füllen.

Wird die Druckquelle eingeschaltet, dringt das Druckfluid über die Abzweigung in das untere Ende des aufsteigenden Rohrabschnitts ein, der obere Ventilkörper wird im aufsteigenden Rohrabschnitt nach oben getrieben, und ein Schwall schlammhaltigen Abwassers wird aus der Klärkammer durch die obere Mündung des Schlammhebers in die Vorklärkammer befördert. Erreicht der obere Ventilkörper den oberen Ventilsitz, wird dieser geschlossen. Fernerwird durch den ansteigenden Innendruck im Schlammheber gegenüber seiner Umgebung das untere Ventil geschlossen. Dies kann je nach Konstruktion des Schlammhebers und den darin herrschenden Druckverhältnissen nach dem Verschließen des oberen Ventilsitzes oder bereits vorher geschehen.

Sind beide Ventilsitze geschlossen, wird der Belüfter mit Druck beaufschlagt, so dass der Inhalt der Klärkammer mit Sauerstoff versorgt wird. Je nach Ausführung der Anlage kann es sich bei dem von der Druckquelle zur Verfügung gestellten Druckfluid um Druckluft, ein Luft-Wasser-Gemisch oder um Wasser handeln, das erst auf dem Weg zum Belüfter mit Luft angereichert wird, z. B. mittels einer Injektordüse an der Druckleitung für die Funktionsweise der Erfindung sind diese Einzelheiten im Prinzip unerheblich.

In der Regel werden solche Kleinkläranlagen intermittierend belüftet. In den Belüftungspausen kann sich der Belebtschlamm zumindest teilweise am Boden der Klärkammer absetzen. Befindet sich nur wenig Schlamm in der Klärkammer, wird bei dem vorstehenden Betrieb des Schlammhebers auch wenig oder kein Schlamm abgefördert. Erst wenn eine größere Menge Schlamm vorhanden ist, füllt sich der Schlammheber im drucklosen Zustand teilweise von seinem unteren Ende her mit Schlamm, so dass dieser auf die vorstehend beschriebene Weise mittels Druckbeaufschlagung zurück in die Vorklärkammer abgefördert wird. Die gewünschte Menge des in der Klärkammer vorhandenen Schlamms läßt sich damit im Prinzip über die Höhe der Anordnung des unteren Endes des Schlammhebers in der Klärkammer regeln. Je niedriger der Schlammheber angeordnet wird, desto kleiner ist das Schlammvolumen, dass sich unterhalb seines unteren Endes am Behälterboden sammeln kann.

In einer bevorzugten Ausführungsform ist an das untere Ende des aufsteigenden Rohrabschnitts ein absteigender Rohrabschnitt angeschlossen, in dem sich ein zweiter Ventilkörper mit einer Dichte kleiner als der des Abwassers befindet und der an seinem unteren Ende einen Ventilsitz für den zweiten Ventilkörper aufweist.

Bei gefülltem Schlammheber schwimmt dieser zweite Ventilkörper mit niedriger Dichte gegen das obere Ende des absteigenden Rohrabschnitts auf und öffnet somit den unteren Ventilsitz, so dass schlammhaltiges Abwasser durch das untere Ventil in den Schlammheber eindringen kann. Bei einer Druckbeaufschlagung des Schlammhebers über den Druckanschluß wird der untere Ventilkörper in seinen Ventilsitz getrieben, und das untere Ventil wird verschlossen.

Vorzugsweise weist der aufsteigende Rohrabschnitt an seinem unteren Ende einen Anschlag für den oberen Ventilkörper auf, und der absteigende Rohrabschnitt weist an seinem oberen Ende einen Anschlag für den unteren Ventilkörper auf.

Weiter vorzugsweise bilden der aufsteigende und der absteigende Rohrabschnitt zwei aneinander anschließende Abschnitte eines senkrechten Rohrs.

In einer bevorzugten Ausführungsform ist an der Anschlußstelle der aneinander anschließenden Rohrabschnitte ein gemeinsamer Anschlag für den oberen und den unteren Ventilkörper vorgesehen.

Dies kann beispielsweise ein seitlich in die Rohrwand eingesetzter Stift sein, auf welchen der obere schwere Ventilkörper im drucklosen Zustand des Schlammhebers absinkt, während der leichte schwimmende Ventilkörper im absteigenden Rohrabschnitt von unten an diesen Stift anstoßen kann.

In einer weiteren bevorzugten Ausführungsform ist das untere Ende des absteigenden Rohrabschnitts in einer vorbestimmten Höhe über den Boden der Klärkammer angeordnet.

Vorzugsweise mündet ein von der Druckquelle ausgehender erster Abschnitt der Druckleitung in einen Einlaß eines T-Stücks, das zwei Auslässe aufweist, von denen ein erster Auslaß über einen weiteren Druckleitungsabschnitt an den Belüfter angeschlossen ist und der zweite Auslaß an den Schlammheber angeschlossen ist.

In einer bevorzugten Ausführung der Erfindung ist die Druckquelle ein Kompressor zur Beaufschlagung des Belüfters mit Druckluft.

In einer weiteren bevorzugten Ausführungsform ist die Druckquelle eine Pumpe zur Förderung von Wasser in Richtung des Belüfters, und eine Luft-Ansaugleitung mündet in die Druckleitung.

Im folgenden wird ein bevorzugtes Ausführungsbeispiel der vorliegenden Erfindung anhand der beigefügten Zeichnung näher erläutert.

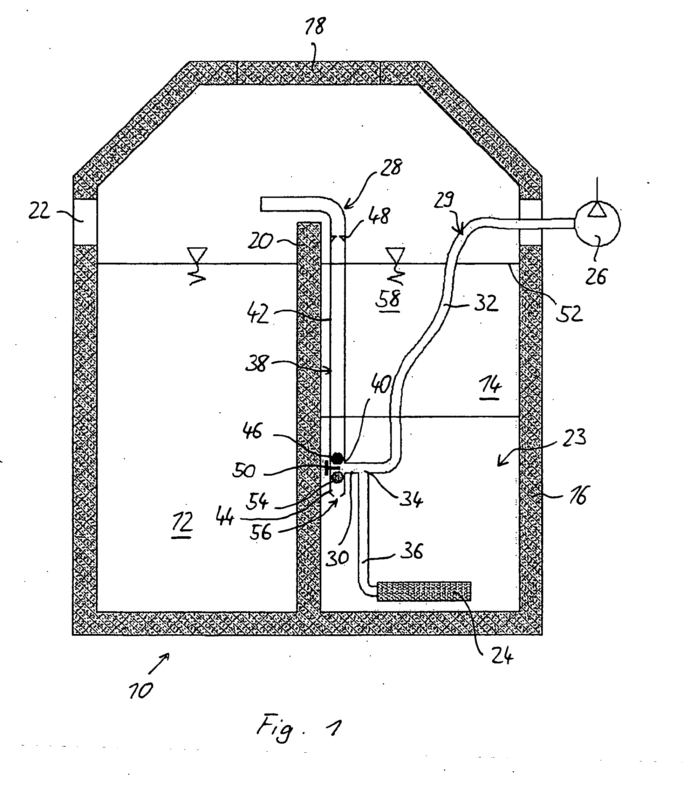

Die Fig. 1 bis 4 sind schematische Darstellungen einer Ausführungsform der erfindungsgemäßen biologischen Klärvorrichtung in verschiedenen Betriebszuständen.

Die in Fig. 1 dargestellte biologische Klärvorrichtung, die in ihrer Gesamtheit mit der Bezugsziffer 10 bezeichnet wird, umfaßt eine in den Figuren links angeordnete Vorklärkammer 12 und eine Klärkammer 14, die innerhalb eines zylindrischen Behälters 16 angeordnet sind, der durch einen Deckel 18 ver-schlossen ist. Innerhalb des Behälters 16 sind die Vorklärkammer 12 und die Klärkammer 14 durch eine Trennwand 20 voneinander getrennt. Im oberen Bereich der Außenwand des Behälters 16 der Vorklärkammer 12 ist ein Abwasser-Zulauf 22 angeordnet, durch welchen Schmutzwasser in die Vorklärkammer 12 eingelassen wird. Innerhalb der Vorklärkammer 12 können sich grobe Verunreinigungen am Boden oder im Bereich des Wasserspiegels absetzen, bevor das Abwasser in die eigentliche Klärkammer 14 überführt wird. Diese Überführung kann beispielsweise durch im oberen Bereich der Trennwand 20 angeordnete Überläufe, durch Pumpeinrichtungen oder dergleichen erfolgen, die hinlänglich bekannt sind und aus Gründen der Übersichtlichkeit in den Figuren nicht näher dargestellt sind.

In der eigentlichen Klärkammer 14 findet eine biologische Abwasserreinigung statt. Hierzu befindet sich Belebtschlamm 24 in der Klärkammer 14, dessen Mikroorganismen für die biologische Klärung sorgen. Das gereinigte Abwasser verläßt die Klärkammer 14 über einen geeigneten Ablauf im oberen Bereich der Klärkammer 14. Da der Belebtschlamm 23 sich am Boden der Klärkammer 14 absetzt, kann das Klarwasser aus dem Oberflächenbereich der Klärkammer 14 entnommen werden.

Zur Sauerstoffversorgung der Mikroorganismen ist im Bodenbereich der Klärkammer 14 ein Belüfter 24 angeordnet, bei welchem es sich um einen Membranlüfter handelt. Der Belüfter 24 wird über eine Druckleitung 29 mit einem lufthaltigen Druckfluid versorgt, wie etwa Druckluft oder einem Luft-Wasser-Gemisch. Im vorliegenden Fall handelt es sich bei der Druckquelle um einen außerhalb des Behälters 16 angeordneten Kompressor 26, der über die Druckleitung 29 den Belüfter 24 mit Druckluft speist. Außerdem befindet sich in der Klärkammer 14 im Bereich der Trennwand 20 ein Schlammheber in der Form eines Drucklufthebers 28 zur Rückführung von Schlamm aus dem Bodenbereich der Klärkammer 14 zurück in die Vorklärkammer 12 über die Trennwand 20 hinweg.

Alternativ ist es möglich, statt des Kompressors 26 eine Wasserpumpe als Druckquelle vorzusehen, die unter Druck Wasser in Richtung des Belüfters 24 durch die Druckleitung 29 pumpt. Durch eine Luft-Ansaugleitung, die über eine Injektordüse an die Druckleitung 29 angeschlossen ist, kann das zugeförderte Wasser mit Luft angereichert werden. In der folgenden Beschreibung soll der Einfachheit halber weiterhin davon ausgegangen werden, dass es sich bei dem Druckfluid um Druckluft handelt. Diese Auswahl ist jedoch nicht beschränkend.

Bei der in den Fig. 1 bis 4 dargestellten Ausführungsform muß der Druckluftheber 28 zu seinem Betrieb ebenfalls mit Druckluft versorgt werden. Hierzu geht von der Druckleitung 29 eine Abzweigungsleitung 30 aus, die seitlich in den unteren Bereich des Drucklufthebers 28 mündet. Im einzelnen mündet ein vom Kompressor 26 ausgehender erster Abschnitt 32 der Druckleitung 29 in einen Einlaß eines T-Stücks 34, das zwei Auslässe aufweist. Der erste dieser Auslässe ist über einen weiteren Druckleitungsabschnitt 36 an den Belüfter 24 angeschlossen, während der zweite Auslaß über die Abzweigung 30 an einem Druckanschluß 40 am Druckluftheber 28 angeschlossen ist. Auf diese Weise läßt sich die vom Kompressor 26 erzeugte Druckluft auf den Belüfter 24 und auf den Druckluftheber 28 verteilen, wie es nachfolgend näher beschrieben wird.

Bei dem Druckluftheber 28 handelt es sich im wesentlichen um ein senkrechtes, an seinem oberen Ende oberhalb der Trennwand 20 abgewinkeltes Rohr 38, an dessen Rohrwand der Druckanschluß 40 angeordnet ist. Der obere Abschnitt dieses Rohrs 38, der sich oberhalb des Druckanschlusses 40 befindet, soll nachfolgend als aufsteigender Rohrabschnitt 42 bezeichnet werden. Unterhalb des Druckanschlusses 40 schließt sich an das untere Ende des aufsteigenden Rohrabschnitts 42 ein wesentlich kürzerer absteigender Rohrabschnitt 44 an.

Während das untere Ende des aufsteigenden Rohrabschnitts 42 über den Druckanschluß 40 an die Abzweigung 30 von der Druckleitung 29 angeschlossen ist, ist sein oberes Ende zur seitlich abgewinkelten Mündung des Drucklufthebers 28 hin offen. Innerhalb des aufsteigenden Rohrabschnitts 42 befindet sich ein oberer Ventilkörper in Form einer Ventilkugel 46, deren Durchmesser geringfügig kleiner ist als der Innendurchmesser des aufsteigenden Rohrabschnitts 42, so dass die obere Ventilkugel 46 innerhalb dieses Rohrabschnitts 42 aufwärts und abwärts frei beweglich ist. Am oberen Ende des aufsteigenden Rohrabschnitts 42 ist ein oberer Ventilsitz 48 angebracht, der durch die obere Ventilkugel 46 verschließbar ist. Am unteren Ende des aufsteigenden Rohrabschnitts 42 ist hingegen ein Stift 50 seitlich in die Rohrwand eingesetzt, der als unterer Anschlag für die obere Ventilkugel 46 dient. Die obere Ventilkugel 46 weist eine Dichte > 1 auf, das heißt größer als das Abwasser in der Klärkammer 14. Ist der Druckluftheber 28 gefüllt, liegt die obere Ventilkugel 46 daher aufgrund ihres Eigengewichts auf dem Stift 50 auf.

Der Wasserspiegel 52 der Klärkammer 14 befindet sich im oberen Bereich der Trennwand 20 weit oberhalb des Druckanschlusses 40, so dass der aufsteigende Rohrabschnittt 42 weitgehend mit Abwasser bzw. einem Gemisch aus Wasser und Schlamm gefüllt ist. Die obere Ventilkugel 46 liegt, wie bereits erwähnt, in diesem Fall auf dem Stift 50 auf. Wird durch einen Betrieb des Kompressors 26 Luft über die Abzweigung 30 in den unteren Bereich des Drucklufthebers 28 eingeleitet, wird die obere Ventilkugel 46 nach oben getrieben, und das oberhalb der oberen Ventilkugel 46 befindliche Wasser-Schlamm-Gemisch wird durch das obere Ende des Drucklufthebers 28 in die Vorklärkammer 12 befördert, bis die obere Ventilkugel 46 den oberen Ventilsitz 48 erreicht und diesen weitgehend verschließt. Auf diese Weise kann beim Einschalten des Kompressors 26 schwallweise Schlamm zurück in die Vorklärkammer 12 zurückgeführt werden. Hierbei wird zunächst der Belüfter 24 noch nicht mit Druckluft versorgt, da die Luft weitgehend durch das obere Ende des Drucklufthebers 28 entweichen kann.

Im absteigenden Rohrabschnitt 44 befindet sich ebenfalls ein Ventilkörper, nämlich eine untere Ventilkugel 54, deren Durchmesser geringfügig kleiner ist als der Innendurchmesser des absteigenden Rohrabschnitts 44, so dass sich auch diese untere Ventilkugel 54 frei aufwärts und abwärts im absteigenden Rohrabschnitt 44 bewegen kann. Das untere Ende dieses absteigenden Rohrabschnitts 44 befindet sich in einem vorbestimmten Abstand über dem Boden der Klärkammer 14 und ist als Ventilsitz 56 für die untere Ventilkugel 54 ausgebildet, so dass die untere Ventilkugel 54 zusammen mit ihrem Ventilsitz 56 ein unteres Ventil bildet, das durch eine Druckbeaufschlagung des Drucklufthebers 28 von innen verschließbar ist. Die untere Ventilkugel 54 weist eine Dichte <1. das heißt kleiner als das Abwasser in der Klärkammer 14 auf, so dass die Kugel 54 bei gefülltem absteigendem Rohrabschnitt 44, schwimmt. Befindet sich der Wasserspiegel 52 im oberen Bereich der Klärkammer 14, schwimmt die untere Ventilkugel 54 gegen den Stift 50 auf, der als oberer Anschlag für die untere Ventilkugel 54 dient. Der Stift 50 dient damit als gemeinsamer Anschlag für die obere Ventilkugel 46 und die untere Ventilkugel 54.

Die vorstehend beschriebene biologische Klärvorrichtung 10 arbeitet wie folgt.

Fig. 1 zeigt die Situation am Ende einer Belüftungspause, in der sich der Belebtschlamm 23 im unteren Bereich der Klärkammer 14 gesammelt hat. Oberhalb des Belebtschlamms 23 befindet sich Klarwasser 58 unterhalb des Wasserspiegels 52. Der Wasserspiegel 52 steht geringfügig unterhalb des oberen Ventilsitzes 48, so dass der aufsteigende Rohrabschnitt 42 weitgehend mit einem Wasser-Schlamm-Gemisch gefüllt ist. Die Anlage ist hier drucklos, d. h. der Kompressor 26 versorgt den Druckluftheber 28 und den Belüfter 24 nicht mit Druckluft. Die obere Ventilkugel 46 liegt auf dem Stift 50 auf, während die untere Ventilkugel 54 von unten gegen den Stift 50 aufschwimmt.

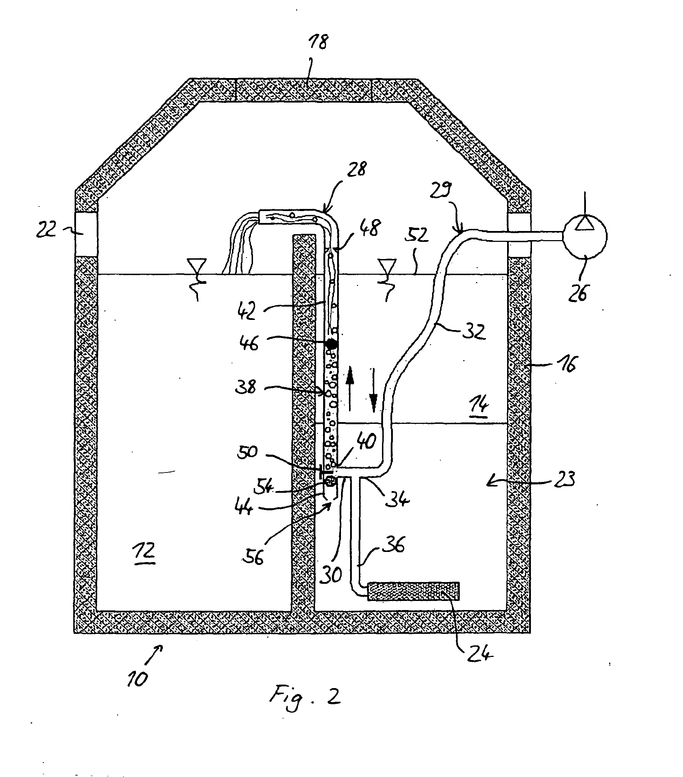

Wird der Kompressor 26 eingeschaltet, gelangt Druckluft über den ersten Abschnitt 32 der Druckluftleitung 29, das T-Stück 34, die Abzweigung 30 und den Druckanschluß 40 in den Druckluftheber 28. Die Luft dringt in den aufsteigenden Rohrabschnitt 42 von seinem unteren Ende her ein und treibt die obere Ventilkugel 46 in den oberen Ventilsitz 48, wobei auf die bereits beschriebene Weise ein Schwall des Wasser-Schlamm-Gemisches aus der oberen Mündung des Drucklufthebers 28 in die Vorklärkammer 12 befördert wird (siehe Fig. 2).

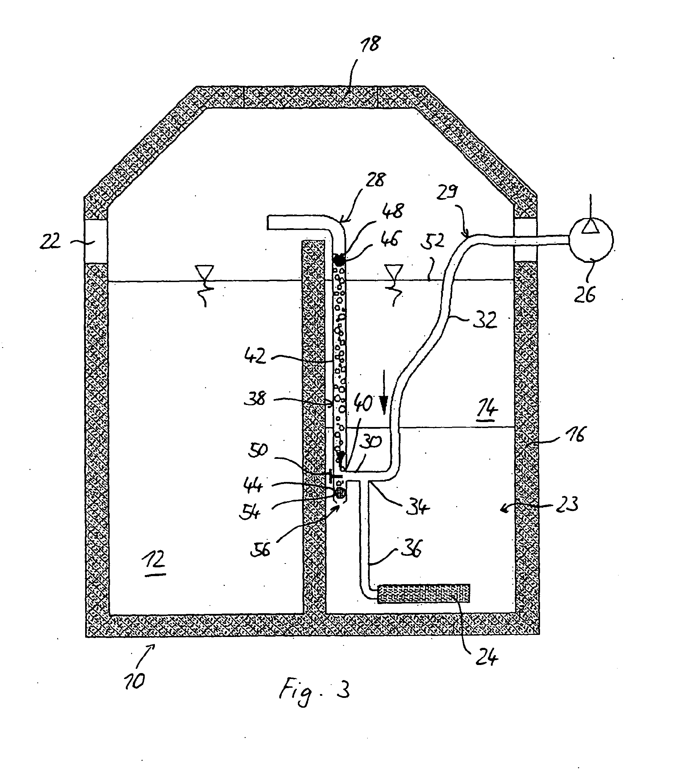

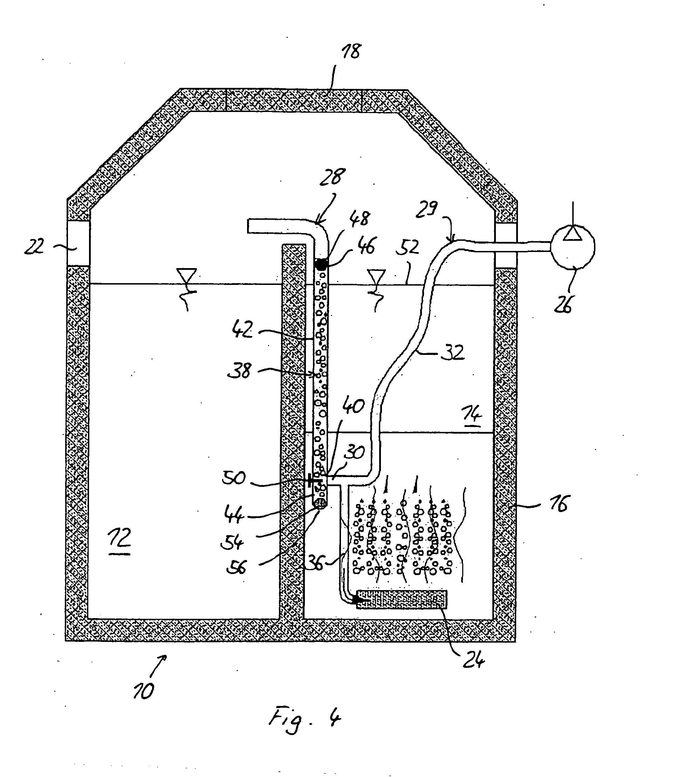

Ist die obere Ventilkugel 46 in dem oberen Ventilsitz 48 angelangt, wie in Fig. 3 gezeigt, treibt die in den Druckluftheber 28 eindringende Druckluft die untere Ventilkugel 54 nach unten in den unteren Ventilsitz 56 des absteigenden Rohrabschnittes 44 und verschließt diesen. In diesem Moment ist der Druckluftheber 28 an seinen beiden Enden verschlossen (Fig. 4). Das Verschließen des unteren Ventilsitzes 56 durch die untere Ventilkugel 54 kann je nach Bauart des Drucklufthebers 28 auch vor dem Erreichen des oberen Ventilsitzes 48 durch die obere Ventilkugel 46 geschehen, so dass der Druckluftheber 28 zuerst an seinem unteren Ende verschlossen wird und das schwallweise Abfördern des darin enthaltenden Schlamm anschließend erfolgt.

Die in das T-Stück 34 eindringende Druckluft kann dann über den zweiten Druckleitungsabschnitt 36 in den Belüfter 24 eindringen und diesen mit Luft versorgen. Das heißt, dass in die Klärkammer 14 Sauerstoff eingebracht wird, nachdem zunächst überschüssiger Schlamm in die Vorklärkammer 12 abgeführt worden ist.

Die Belüftung der Klärkammer 14 erfolgt in der Regel intermittierend, d. h., Belüftungsphasen wechseln sich mit Belüftungspausen ab. In den Belüftungspausen kann sich der Belebtschlamm 23 am Boden der Klärkammer 14 sammeln. Zu Beginn jeder neuen Belüftungsphase findet dann die oben beschriebene schwallweise Schlammrückführung durch den Druckluftheber 28 statt, an welche sich die Belüftung durch den Betrieb des Belüfters 24 anschließt. Wird der Kompressor 26 wieder abgeschaltet, entweicht die Luft langsam wieder aus dem Druckluftheber 28, die Ventilkugeln 46 und 54 lösen sich aus ihren Ventilsitzen und gelangen wieder zu ihrem Anschlag 50. Hierzu kann sich am oberen Ventilsitz 48 oder an einer anderen geeigneten Stelle eine leichte Undichtigkeit befinden, durch welche etwas Luft nach außen entweichen kann, so dass sich die obere Ventilkugel 46 wieder problemlos aus dem Ventilsitz 48 lösen kann. Nach dem Druckabbau kann vom unteren Ende des Drucklufthebers 28 her erneut ein Schlamm-Wasser-Gemisch durch den offenen unteren Ventilsitz 56 eindringen und den Druckluftheber 28 füllen.

Befindet sich nur wenig Belebtschlamm 23 in der Klärkammer 14, wird sich dieser unterhalb des unteren Endes des Drucklufthebers 28 sammeln, so dass auch kein Schlamm durch den absteigenden Rohrabschnitt 44 eindringen kann, oder wenn Schlamm durch die Öffnung eingedrungen ist, dieser während der Pause aus dem Druckluftheber 28 heraus sinkt. Steigt die Menge des Belebtschlamms 23, dringt um so mehr Schlamm in den Druckluftheber 28 ein und wird bei dessen Betrieb abgefördert. Die Menge des Belebtschlamms in der Klärkammer 14 läßt sich somit durch die Wahl der Höhe des unteren Endes des absteigenden Rohrabschnitts 44 über den Boden der Klärkammer 14 steuern. Je kleiner die Höhe, desto mehr Schlamm wird in einem Rückführungszyklus abgefördert. Ferner läßt sich natürlich auch die Schlammmenge durch die Länge der Belüftungs- und Absetzintervalle steuern.

Die erfindungsgemäße Konstruktion bietet den wesentlichen Vorteil, dass zur Steuerung der Druckfluidverteilung auf den Druckluftheber 28 und den Belüfter 24 keine aufwendigen Ventile wie etwa Magnetventile oder dergleichen sowie Steuerungseinrichtungen erforderlich sind.

## Patentansprüche

1. Biologische Klärvorrichtung (10), mit mindestens einer Vorklärkammer (12), mindestens einer Klärkammer (14) und Einrichtungen zur Beförderung und Behandlung von Abwasser, welche Einrichtungen zumindest einen in der Klärkammer (14) angeordneten Belüfter (24), eine Druckquelle (26) für ein Druckfluid, eine von der Druckquelle (26) zum Belüfter (24) führende Druckleitung (29) und einen Schlammheber (28) zur Rückführung von Schlamm aus der Klärkammer (14) in die Vorklärkammer (12) umfassen, **dadurch gekennzeichnet, dass** der Schlammheber (28) über eine von der Druckleitung (29) ausgehende Abzweigung (30) an die Druckleitung (29) angeschlossen ist, und dass der Schlammheber (28) einen aufsteigenden Rohrabschnitt (42) umfasst, in dem sich ein oberer Ventilkörper (46) mit einer Dichte größer als der des Abwassers befindet, dessen unteres Ende an die Abzweigung angeschlossen ist und der an seinem oberen Ende einen Ventilsitz (48) für den oberen Ventilkörper (46) aufweist, und dass an das untere Ende des aufsteigenden Rohrabschnitts (42) ein von der Abzweigung (30) aus absteigender Rohrabschnitt (44) angeschlossen ist, in dem sich ein unterer Ventilkörper (54) befindet und der an seinem unteren Ende einen Ventilsitz (56) für den unteren Ventilkörper (54) aufweist, welcher untere Ventilsitz (56) zur Umgebung hin offen ist und gemeinsam mit dem Ventilkörper (54) ein unteres Ventil zur Verbindung des Innenbereichs des Schlammhebers (28) mit der Umgebung bildet, welches durch eine Druckbeaufschlagung des Schlammhebers (28) von innen verschließbar ist.

2. Biologische Klärvorrichtung gemäß Anspruch 1, **dadurch gekennzeichnet, dass** der untere Ventilkörper (54) eine Dichte kleiner als die des Abwassers aufweist.

3. Biologische Klärvorrichtung gemäß Anspruch 2, **dadurch gekennzeichnet, dass** der aufsteigende Rohrabschnitt (42) und der absteigende Rohrabschnitt (44) zwei aneinander anschließende Abschnitte eines senkrechten Rohrs (38) bilden.

4. Biologische Klärvorrichtung gemäß Anspruch 3 in Verbindung mit Anspruch 2, **dadurch gekennzeichnet, dass** an der Anschlussstelle der aneinander anschließenden Rohrabschnitte (42,44) ein gemeinsamer Anschlag (50) für den oberen und den unteren Ventilkörper (46,54) vorgesehen ist.

5. Biologische Klärvorrichtung gemäß einem der vorhergehenden Ansprüche, **dadurch gekennzeichnet, dass** das untere Ende des absteigenden Rohrabschnitts (44) über dem Boden der Klärkammer (14) beabstandet angeordnet ist.

6. Biologische Klärvorrichtung gemäß einem der vorhergehenden Ansprüche, **dadurch gekennzeichnet, dass** ein von der Druckquelle (26) ausgehender erster Abschnitt (32) der Druckleitung (29) in einen Einlaß eines T-Stücks (34) mündet, das zwei Auslässe aufweist, von denen ein erster Auslass über einen weiteren Druckleitungsabschnitt (36) an den Belüfter (24) angeschlossen ist und der zweite Auslass über die Abzweigung (30) an den Schlammheber (28) angeschlossen ist.

7. Biologische Klärvorrichtung gemäß einem der vorhergehenden Ansprüche, **dadurch gekennzeichnet, dass** die Druckquelle (26) ein Kompressor zur Beaufschlagung des Belüfters (24) mit Druckluft ist.

8. Biologische Klärvorrichtung gemäß einem der vorhergehenden Ansprüche 1 bis 6, **dadurch gekennzeichnet, dass** die Druckquelle (26) eine Pumpe zur Förderung von Wasser in Richtung des Belüfters (24) ist, und dass in die Druckleitung (29) eine Luft-Ansaugleitung zum Ansaugen von Luft während des Betriebs der Pumpe mündet.

## Claims

1. Biological clarification apparatus (10), having at least one preclarification chamber (12), at least one clarification chamber (14) and devices for conveying and treating wastewater, which devices comprise at least one aerator (24) disposed in the clarification chamber (14), a pressure source (26) for a compressed fluid, a pressure line (29) leading from the pressure source (26) to the aerator (24), and a sludge lift (28) for returning sludge from the clarification chamber (14) to the preclarification chamber (12), **characterised in that** the sludge lift (28) is connected to the pressure line (29) by way of a branch line (30) extending from the pressure line (29), and **in that** the sludge lift (28) comprises an ascending pipe portion (42) in which an upper valve body (46) having a density greater than that of the wastewater is located, and the lower end of which is connected to the branch line and which has at its upper end a valve seat (48) for the upper valve body (46), and **in that** there is connected to the lower end of the ascending pipe portion (42) a pipe portion (44) which descends from the branch line (30) and in which a lower valve body (54) is located and which has at its lower end a valve seat (56) for the lower valve body (54), which lower valve seat (56) is open towards the surroundings and, together with the valve body (54), forms a lower valve for connecting the inner region of the sludge lift (28) to the surroundings, which valve can be closed from the inside by applying pressure to the sludge lift (28).

2. Biological clarification apparatus according to claim 1, **characterised in that** the lower valve body (54) has a density which is lower than that of the wastewater.

3. Biological clarification apparatus according to claim 2, **characterised in that** the ascending pipe portion (42) and the descending pipe portion (44) form two mutually adjoining portions of an upright pipe (38).

4. Biological clarification apparatus according to claim 3 in combination with claim 2, **characterised in that** a common stop (50) for the upper and the lower valve body (46, 54) is provided at the junction of the mutually adjoining pipe portions (42, 44).

5. Biological clarification apparatus according to any one of the preceding claims, **characterised in that** the lower end of the descending pipe portion (44) is disposed at a distance above the base of the clarification chamber (14).

6. Biological clarification apparatus according to any one of the preceding claims, **characterised in that** a first portion (32) of the pressure line (29), which first portion (32) extends from the pressure source (26), leads into an inlet of a T-piece (34) which has two outlets, of which a first outlet is connected to the aerator (24) by way of a further pressure line portion (36), and the second outlet is connected to the sludge lift (28) by way of the branch line (30).

7. Biological clarification apparatus according to any one of the preceding claims, **characterised in that** the pressure source (26) is a compressor for applying compressed air to the aerator (24).

8. Biological clarification apparatus according to any one of the preceding claims 1 to 6, **characterised in that** the pressure source (26) is a pump for delivering water in the direction towards the aerator (24), and **in that** an air-intake line for the intake of air during the operation of the pump leads into the pressure line (29).

## Revendications

1. Décanteur biologique (10), comportant au moins un décanteur primaire (12), au moins une chambre de décantation (14) et des dispositifs pour le transport et le traitement des eaux usées, lesquels dispositifs comprennent au moins un aérateur (24), disposé dans la chambre de décantation (14), une source de pression (26) pour un fluide sous pression, une conduite sous pression (29) menant depuis la source de pression (26) vers l'aérateur (24), et un siphon pour boues (28) pour renvoyer les boues issues de la chambre de décantation (14) dans le décanteur primaire (12), **caractérisé en ce que** le siphon pour boues (28) est raccordé à la conduite sous pression (29) par un embranchement (30) partant de la conduite sous pression (29), et **en ce que** le siphon pour boues (28) comporte une partie tubulaire montante (42), dans laquelle est disposé un corps de soupape (46) supérieur avec une densité supérieure à celle des eaux usées, dont l'extrémité inférieure est raccordée à l'embranchement et dont l'extrémité supérieure comporte un siège de soupape (48) pour le corps de soupape (46) supérieur, et **en ce qu'**à l'extrémité inférieure de la partie tubulaire montante (42) est raccordée à partir de l'embranchement (30) une partie tubulaire descendante (44), dans laquelle est disposé un corps de soupape (54) inférieur et qui comporte, à son extrémité inférieure, un siège de soupape (56) pour le corps de soupape (54) inférieur, ledit siège de soupape (56) inférieur étant ouvert vers l'environnement et formant conjointement avec le corps de soupape (54) une soupape inférieure pour faire communiquer la zone intérieure du siphon pour boues (28) avec l'environnement, laquelle zone peut être obturée de l'intérieur par une sollicitation en pression du siphon pour boues (28).

2. Décanteur biologique selon la revendication 1, **caractérisé en ce que** le corps de soupape inférieur (54) possède une densité inférieure à celle des eaux usées.

3. Décanteur biologique selon la revendication 2, **caractérisé en ce que** la partie tubulaire montante (42) et la partie tubulaire descendante (44) forment deux parties adjacentes l'une à l'autre d'un tube (38) vertical.

4. Décanteur biologique selon la revendication 3 en association avec la revendication 2, **caractérisé en ce qu'**au niveau de la zone de jonction des parties tubulaires (42, 44) adjacentes l'une à l'autre est prévue une butée (50) commune pour le corps de soupape supérieur (46) et le corps de soupape inférieur (54).

5. Décanteur biologique selon l'une quelconque des revendications précédentes, **caractérisé en ce que** l'extrémité inférieure de la partie tubulaire descendante (44) est située à distance au-dessus du fond de la chambre de décantation (14).

6. Décanteur biologique selon l'une quelconque des revendications précédentes, **caractérisé en ce qu'**une première partie (32) de la conduite sous pression (29), partant de la source de pression (26), débouche dans une entrée d'une pièce en T (34) munie de deux sorties, dont une première sortie est raccordée à l'aérateur (24) via une autre partie (36) de la conduite sous pression et dont la deuxième sortie est raccordée au siphon pour boues (28) via l'embranchement (30).

7. Décanteur biologique selon l'une quelconque des revendications précédentes, **caractérisé en ce que** la source de pression (26) est un compresseur destiné à fournir de l'air comprimé à l'aérateur (24).

8. Décanteur biologique selon l'une quelconque des revendications précédentes 1 à 6, **caractérisé en ce que** la source de pression (26) est une pompe pour refouler l'eau vers l'aérateur (24), et **en ce qu'**une conduite d'aspiration d'air, destinée à aspirer l'air pendant le fonctionnement de la pompe, débouche dans la conduite sous pression (29).
